# EUROPÄISCHE PATENTSCHRIFT

(11) **EP 0 960 871 B1**
(45) Veröffentlichungstag und Bekanntmachung des Hinweises auf die Patenterteilung: **08.10.2003**
(21) Anmeldenummer: 99109739.5
(22) Anmeldetag: 18.05.1999
(51) Int. Cl.: C04B 41/49, C09D 183/14, C09D 183/04, C08J 3/03

(54) **Wässrige Zubereitung zur Behandlung mineralischer Baustoffe**
Aqueous composition for treating mineral building materials
Compositions aqueuses pour le traitement de matériaux minérales de construction

(30) Priorität: 29.05.1998 DE 19824188
(43) Veröffentlichungstag der Anmeldung: 01.12.1999
(73) Patentinhaber: BAYER AG, 51368 Leverkusen (DE)
(72) Erfinder: Kirchmeyer, Stephan Dr., 51375 Leverkusen (DE); Mechtel, Markus Dr., 50973 Köln (DE); Käsler, Karl-Heinz, 51375 Leverkusen (DE)

(56) Entgegenhaltungen:
- EP-A- 0 744 443
- WO-A-98/38251
- WO-A-98/52992
- DE-A- 19 807 634

## Beschreibung

Die vorliegende Erfindung betrifft neue wässrige Zubereitungen zur Behandlung von mineralischen Baustoffen, enthaltend I) eine wässrige Emulsion mindestens eines polyfunktionellen Carbosilans und/oder -siloxans (A) und/oder dessen (Teil)-Kondensationsprodukt, II) eine Emulsion mindestens eines Organo(poly)siloxans (B), III) mindestens ein in Wasser dispergierbares oder emulgiertes organisches Polymer (C), IV) in Wasser dispergierte oder dispergierbare anorganische Nanopartikel (D) sowie V) gegebenenfalls weitere Zusatzstoffe (E).

Die Bau- und Baustoffindustrie sucht nach wässrigen Behandlungsmitteln für mineralische Baustoffe, die gut imprägnieren beziehungsweise hydrophobieren, die zum Schutz vor Umwelteinflüssen die Chemikalienbeständigkeit erhöhen und die dem Baustoff gleichzeitig gute Easy to Clean-Eigenschaften verleihen. Dabei darf das Erscheinungsbild des mineralischen Baustoffs nicht verändert werden, beispielsweise um Denkmäler, Natursteinfassaden oder Terracottamaterialien vor Umwelteinflüssen oder vor Graffiti zu schützen.

Als Imprägnier-, Hydrophobier- und Bautenschutzmittel für mineralische Baustoffe haben sich wässrige Emulsionen siliciumorganischer Verbindungen durchgesetzt.

In DE-A-195 17 346 werden beispielsweise wässrige Emulsionen siliciumorganischer Verbindungen zur Hydrophobierung von porösen mineralischen Baustoffen und Baubeschichtungen beschrieben. Wässrige Emulsionen siliciumorganischer Verbindungen führen auf mineralischen Baustoffen nur zu unzureichenden Easy to Clean-Eigenschaften.

In DE-A-37 02 542 werden Pfropfcopolymerisate aus (Meth)Acrylsäurederivaten und alkoxyfunktionellen Siliconharzen zur Imprägnierung, insbesondere im Bautenschutz beschrieben. Diese Pfropfcopolymerisate sind zwar gute Imprägniermittel und verleihen mineralischen Baustoffen, insbesondere als pigmentierte Formulierung, gute Easy to Clean-Eigenschaften, sie enthalten allerdings organische Lösemittel und verändern das optische Erscheinungsbild des Substrates.

Aus WO 97/12 940 sind wässrige Zubereitungen, die eine Emulsion eines wasserunlöslichen oder wenig löslichen Alkoxysilans und ein in Wasser dispergierbares oder emulgiertes alkoxysilangruppenhaltiges Polymer enthalten, bekannt.

Zudem sind Beschichtungsmittel auf Basis multifunktioneller Carbosilane bekannt, siehe US-A-5 378 790, US-A-5 621 038 und US-A-5 686 523. Die Herstellung solcher Hybridmaterialien erfolgt meistens in verdünnter organischer Lösung, in der Regel mittels eines Sol/Gel-Prozesses, was für viele Anwendungen nachteilig ist, da z.B. bei den bekannten Hybridmaterialen in einem Sol/Gel-Prozess ein hochmolekulares Netzwerk aufgebaut wird. Diese hochmolekularen Polymere können nicht gut in den mineralischen Baustoff eindringen und führen somit zu einer meist glänzenden Veränderung der Oberfläche des mineralischen Baustoffs. Darüber hinaus sind in Sol/Gel-Prozessen größere Mengen an Lösemittel nötig. Dies ist aufgrund der toxikologischen Eigenschaften und der Brandgefahr der Lösemittel sowie der bestehenden VOC-Richtlinien unerwünscht.

Aufgabe der vorliegenden Erfindung war daher die Bereitstellung einer wässrige Zubereitung, die mineralische Baustoffe wirksam imprägniert bzw. hydrophobiert, die dem mineralischen Baustoff ausreichende chemikalienbeständig sowie gute Easy to Clean-Eigenschaften verleiht und gleichzeitig das äußere Erscheinungsbild des mineralischen Baustoffs nicht verändert.

Überraschenderweise wurde nun gefunden, dass diese Aufgabe durch wässrige Zubereitungen gelöst wird, die eine Emulsion aus mindestens einem polyfünktionellen Carbosilan und/oder -siloxan (A), eine Emulsion mindestens eines Organo(poly)-siloxans (B), mindestens ein in Wasser dispergiertes oder emulgiertes und/oder organisches Polymer (C), in Wasser dispergiertes oder dispergierbares anorganisches Nanopartikels (D) sowie gegebenenfalls weiteres Zusatzstoffes (E) enthalten.

Gegenstand der vorliegenden Erfindung sind daher wässrige Zubereitungen, enthaltend:
I) eine Emulsion eines polyfunktionellen Carbosilans und/oder -Siloxans (A)
II) eine Emulsion mindestens eines Organo(poly)siloxans (B),
III) mindestens ein in Wasser dispergiertes oder emulgiertes organisches Polymer (C),
IV) in Wasser dispergierte oder dispergierbare anorganische Nanopartikel (D) sowie
V) gegebenenfalls weitere Zusatzstoffe (E).

Die polyfunktionellen Carbosilane und/oder -siloxane (A) sind dabei vorzugsweise solche Silane oder Siloxane, die mindestens zwei Einheiten der allgemeinen Formel (1)

-(CH₂)ₘSiR¹ ₙX₃₋ₙ (1)

aufweisen, mit
- m =: 1 bis 6, bevorzugt 2 oder 3,
- n =: 0 bis 2,
- R¹ =: ein unsubstituierter C₁-C₁₈ Kohlenwasserstoff, vorzugsweise Methyl oder Ethyl, oder ein Kohlenwasserstoff, der mindestens O, N, S und/oder P enthält, wobei R¹ innerhalb des Moleküls gleich oder ungleich sein kann und
- X =: ein Rest, ausgewählt aus der Gruppe OH, C₁-C₄-Alkoxy, C₆-C₂₀-Aryloxy, C₁-C₆-Acyloxy oder Wasserstoff, bevorzugt OH oder C₂-Alkoxy.

Diese sind herstellbar beispielsweise durch Umsetzung von Si-H-Bindungen aufweisenden Silanen oder Siloxanen mit Vinyl-, Allyl- oder höhere Alkenylgruppen aufweisenden entsprechend funktionalisierten Silanen oder durch Umsetzung Vinyl-, Allyl- oder höhere Alkenylgruppen aufweisenden Silanen oder Siloxanen mit Si-H-Bindungen aufweisenden entsprechend funktionalisierten Silanen.

In einer weiteren Ausführungsform der Erfindung sind die polyfünktionellen Carbosilane und/oder -siloxane (A) Silane der allgemeinen Formel (2)

R² ₄₋ₚSi[-Oₜ(CH₂)ₘSiR¹ ₙX₃₋ₙ]ₚ (2)

oder deren Teilkondensationsprodukte,
wobei
- t=: 0 oder1,
- p =: 4, 3 oder 2,
- R² =: C₁- C₁₈ Alkyl und/oder C₆- C₂₀-Aryl bedeuten und
- X =: ein Rest, ausgewählt aus der Gruppe OH, C₁-C₄-Alkoxy, C₆-C₂₀-Aryloxy, C₁-C₆-Acyloxy oder Wasserstoff sowie
- m, n und R¹: die zuvor angegebene Bedeutung haben.

In einer weiteren Ausführungsform der Erfindung ist das polyfunktionelle Carbosiloxan (A) ein Siloxan gemäß der zuvor beschriebenen Formel (2), das zusammengesetzt ist aus mindestens zwei Bausteinen, ausgewählt aus monofunktionellen Einheiten R³₃SiO_{1/2}, difunktionellen Einheiten R⁴₂SiO_{2/2} und trifunktionellen Einheiten R⁵SiO_{3/2} sowie gegenenfalls zusätzlich tetrafunktionellen Einheiten SiO_{4/2} und/oder dessen Kondensations- und/oder Teilkondensationsprodukt, mit R³, R⁴ und R⁵ unabhängig voneinder H, C₁-C₁₈-Alkyl, C₁-C₁₈ Alkenyl und/oder C₆-C₂₀-Aryl oder Einheiten der allgemeinen Formel (1).

Diese Siloxane sind z.B. Si-H-Gruppen oder Vinyl-, Allyl- oder höhere Alkenylgruppen enthaltende Siloxane, die nach bekannten Verfahren, wie z.B. durch Hydrolyse und Kondensation der entsprechenden Chlorsilane und gegebenenfalls anschließende Äquilibrierung hergestellt werden.

Die zugrundeliegenden Siloxane weisen vorzugsweise ein Molekulargewicht (Zahlenmittel) zwischen 300 bis 5000 auf.

In einer weiteren bevorzugten Ausführungsform der Erfindung ist das polyfunktionelle Carbosiloxan (A) eine Verbindung der Formel (3) 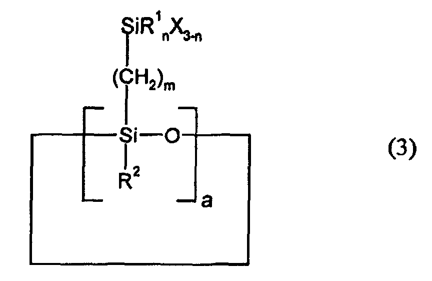 oder deren Teilkondensationsprodukt, wobei
- a =: 3 bis 6, bevorzugt 4 ist, und
- R¹, R², X, m und n: die zuvor angegebene Bedeutung haben.

Ganz besonders bevorzugt handelt es sich bei den polyfünktionellen Carbosilanen (A) um die Verbindungen der Formel (4) und/oder (5) 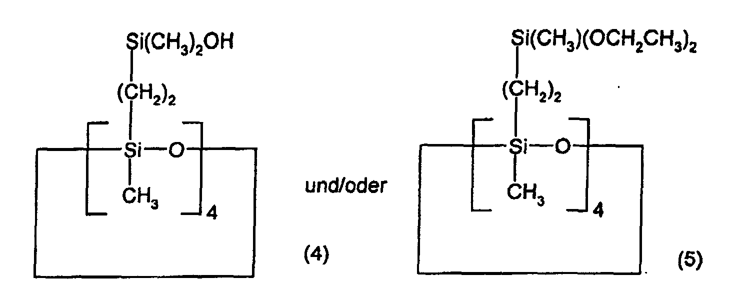 oder deren Teilkondensationsprodukte.

Die Verbindungen (3), (4) und (5) können z.B. nach den in DE-A-19 603 241 oder DE-A-19 711 650 beschriebenen Verfahren hergestellt werden.

Unter Kondensations- bzw. Teilkondensationsprodukte im Sinne der Erfindung werden solche Verbindungen verstanden, die z.B. ganz oder teilweise durch die Reaktion von 2 Resten der allgemeinen Formel (1) unter Abspaltung von Wasser oder Alkohol entstehen.

Die Emulsion ist vorzugsweise wässrig oder ein Gemisch aus Wasser mit reinem Alkohol und weist vorzugsweise einen Anteil von 5 bis 70 Gew.%, besonders bevorzugt 10 bis 50Gew.-% des polyfünktionellen Carbosilans und/oder Siloxans auf.

Das Organo(poly)siloxan (B) ist vorzugsweise mindestens ein hydroxy- und/oder alkoxyfünktionelles Organo(poly)siloxan, das mit Wasser, Emulgatoren d.h. z.B. anionischen, kationischen und nichtionischen wie z.B. Polyoxyethylentriglycerid, oxyethyliertem Tridecyclalkohol und gegebenenfalls weiteren Hilfsstoffen wie z.B. Schutzkolloiden Alterungsschutzmitteln, Bakteriziden, Fungiziden etc. eine Emulsion ausbildet. Das hydroxy- und/oder alkoxyfunktionelle Organopolysiloxan ist vorzugsweise zusammengesetzt aus
0 - 50 Gew.-% monofunktionellen Einheiten R⁶₃SiO_{1/2}
0 - 60 Gew.-% difünktionellen Einheiten R⁷₂SiO_{2/2}
0 - 100 Gew.-% trifunktionellen Einheiten R⁸SiO_{3/2} und
0 - 60 Gew.-% tetrafunktionellen Einheiten SiO_{4/2},
wobei die Summe aller Einheiten 100 Gew.-% ergibt, R⁶, R⁷ und R⁸ unsubstituierte C₁-C₁₈-Kohlenwasserstoffe oder Kohlenwasserstoffe, die mindestens O, N, S und/oder P enthalten, bedeuten und R⁶, 7 und R⁸ innerhalb des Moleküls gleich oder ungleich sein können.

In der Emulsion befindet sich das Organo(poly)siloxan mit einem Anteil von vorzugsweise 5 bis 70 Gew.-%, besonders bevorzugt 10 bis 50 Gew.-%, der Emulgator mit einem Anteil von 0,1 bis 30 Gew.% und Hilfsstoffe mit einem Anteil von 0 bis 20 Gew.-%.

In Wasser dispergierte oder emulgierte organische Polymere (C) im Sinne der Erfindung können den Bestandteilen (A) bzw. (B) gegenüber reaktive oder unreaktive Polymere sein.

Reaktive organische Polymere im Sinne der Erfindung enthalten Gruppen, die stabile kovalente Bindungen mit den anorganischen Bestandteilen (A) bzw. (B) eingehen. Organische Polymere mit entsprechenden reaktiven Gruppen können durch (Co-) Polymerisation hergestellt werden, wie beispielsweise in WO 97/12 940 beschrieben, oder durch Funktionalisierung eines unreaktiven organischen Polymeren. Hierzu sind insbesondere Substanzen geeignet, die eine hohe Reaktivität gegenüber dem organischen Polymeren aufweisen und gleichzeitig auch leicht mit den anorganischen Bestandteilen (A) bzw. (B) des erfindungsgemäßen Mittels reagieren. Beispiele für solche Substanzen sind fünktionalisierte Alkoxysilane.

Beispiele für organische Polymere sind Polyimide, Polycarbonate, Polyester, Polyether, Polyamide, Polyharnstoffe, Polyurethane, Polyacrylnitrile, Polyacrylamide, Poly(meth)acrylester, Polyvinylester, Polyvinylether und Polyolefine, sowie deren Copolymere und Mischungen.

Die im Sinne der Erfindung in Wasser dispergierten oder emulgierten organischen Polymere (C) sind bevorzugt wässrige hydroxyfunktionelle und/oder alkoxysilylgruppenhaltige Acrylatdispersionen. Eine geeignete hydroxyfunktionelle Acrylatdispersion ist beispielsweise unter der Bezeichnung VPLS 2054 bei der Bayer AG erhältlich. Ebenfalls bevorzugte in Wasser dispergierte oder emulgierte organische Polymere (C) sind harnstoff- oder urethangruppenhaltige Polymere mit Hydroxyund/oder Alkoxysilylgruppen. Eine geeignete hydroxyfünktionelle urethangruppenhaltige Polymerdispersion ist bei der Bayer AG unter der Bezeichnung VPLS 2239 erhältlich.

Anorganische Nanopartikel (D) im Sinne der Erfindung sind z.B. Metall- oder Halbmetalloxide bzw. Oxidhydrate mit einem Teilchendurchmesser von 5 -100 nm, bevorzugt von 5 - 50 nm, bestimmt mittels Transmissionselektronenmikroskopie. Beispiele für die erfindungsgemäßen Nanopartikel sind Kieselsole (SiO₂), Böhmit-Sole (Al(O)OH) und/oder TiO₂-Sole. Die anorganischen Nanoteilchen können auch nach den bekannten Verfahren z.B. durch Umsetzung mit Hexamethyldisilazan oberflächenmodifiziert sein. Bevorzugt enthält die erfindungsgemäße Zubereitung Kieselsole mit einer mittleren Teilchengröße von 5 - 100 nm (Zahlungsmittel), ganz besonders bevorzugt Kieselsole mit einer Teilchengröße 5 - 50 nm. Die Teilchengröße lässt sich z.B. mittels Elektronenmikroskopie bestimmen.

Komponente D) entspricht vorzugsweise einer wässrigen Dispersion von SiO₂ mit einer mittleren Teilchengröße von 5 bis 100 nm, vorzugsweise 5 bis 50 nm und einem SiO₂-Gehalt von 15 bis 30 Gew.-%.

Der Feststoffanteil an Komponente C) bzw. auch der von Komponente D) in der jeweiligen Emulsion oder Dispersion beträgt vorzugsweise 5-70 Gew.-%, besonders bevorzugt 10-50 Gew.-%.

Die Zusatzstoffe E) können alle zur Herstellung von Lacken und Farben bekannten Zusatzstoffe, wie z.B. anorganische und/oder organische Pigmente, Lackadditive, wie Dispergier- Verlauf- Verdickungs-, Entschäumungs- und andere Hilfsmittel, Haftmittel, Fungizide, Bakterizide, Stabilisatoren, Inhibitoren sowie Katalysatoren sein. Komponente (V) kann auch ein Gemisch mehrer Zusatzstoffe sein.

Die Herstellung der wässrigen Emulsionen I bzw. II der polyfünktionellen Carbosilane und/oder -siloxane (A) sowie der Organopolysiloxane (B) erfolgt in einem Aggregat, das zum Einbringen hoher Energie geeignet ist, vorzugsweise in einem Homogenisator oder einem Strahldispergator. Das Verfahren der Emulgierung ist dem Fachmann bekannt und wird beispielsweise in Römpp "Chemie-Lexikon", Herausgeber J. Falbe und M. Regitz, G. Thieme Verlag, Stuttgart, New York, Band 2, S. 1158 ff. beschrieben. Der Wirkstoffgehalt der Emulsionen (I) bzw. (II) beträgt jeweils vorzugsweise 5 bis 70 Gew.-%, besonders bevorzugt 30 bis 50 Gew.-%. Als Emulgatoren können alle Emulgatoren eingesetzt werden, die für die Herstellung von stabilen siliconhaltigen wässrigen Emulsion geeignet sind, beispielsweise anionische, kationische und nichtionische Emulgatoren.

Beispiele von anionischen niedermolekularen, oligomeren bzw. polymeren Emulgatoren oder Tensiden sind Alkali- oder Erdalkalisalze von Fettsäuren, z.B. Natriumsalze von gesättigten Fettsäuren mit 10 bis 21 Kohlenstoffatomen, Natriumsalze von ungesättigten Fettsäuren mit 12 bis 18 Kohlenstoffatomen, Alkylethersulfonate wie Ether von α-Sulfo-ω-hydroxy-polyethylenglykolen mit z.B. 1-Methylphenylethylphenol, Nonylphenol oder Alkylethem mit 12 bis 18 Kohlenstoffatomen, Arylalkylsulfonate wie beispielsweise mit geradkettigen oder verzweigten Butylgruppen versehene Naphthalinsulfonsäuren oder Alkylsulfate wie die Natriumsalze von langkettigen Schwefelsäurealkylestem.

Beispiele für kationische niedermolekulare, oligomere bzw. polymere Emulgatoren oder Tenside sind die Salze von langkettigen Alkanreste tragenden Aminen mit 8 bis 22 Kohlenstoffatomen, die mit Säuren oder durch Alkylierung zu den Ammoniumverbindungen umgesetzt wurden, sowie analoge Phosphor- und Schwefelverbindungen.

Beispiele nichtionischer oligomerer bzw. polymerer Emulgatoren oder Tenside sind Alkylpolyglykolether oder -ester wie ethoxylierte gesättigte oder ungesättigte Bindungen tragende langkettige Alkohole z.B. mit 12 bis 18 Kohlenstoffatomen, ethoxyliertes Rizinusöl, ethoxylierte (Kokos)fettsäuren, ethoxyliertes Sojabohnenöl, ethoxylierte Resin- oder Rosinsäuren, ethoxylierter und gegebenenfalls propoxylierter Butyldiglykol, ethoxylierte Alkylarylether wie ethoxyliertes geradkettiges und/oder verzweigtes Nonylphenol oder Octylphenol oder benzyliertes p-Hydroxybiphenyl, ethoxylierte Tri- und Diglyceride und Alkylpolyglykoside.

Geeignet als Emulgatoren sind weiterhin ethoxylierte langkettige Alkyl- oder Alkenylamine, Lecithin, mit langkettigen Alkylisocyanaten modifizierte Umsetzungsprodukte aus Polyethylenglykolen und Diisocyanaten, Umsetzungsprodukte von Rapsölund Diethanolamin oder ethoxylierte Umsetzungsprodukte aus Sorbitan und langkettigen Alkan- oder Alkencarbonsäuren.

Der Gehalt an Emulgatoren in den Emulsionen (I) bzw. (II) beträgt 0,1 bis 30 Gew.-%, vorzugsweise 0,5 bis 10 Gew.-%. Die Emulsionen (I) bzw. (II) können auch bis zu 20 Gew.-% für wässrige Emulsionen übliche Zusatz- und Hilfsstoffe enthalten. Übliche Zusatz- und Hilfsmittel sind beispielsweise Schutzkolloide, Alterungsschutzmittel, Bakterizide, Fungizide, Gleitmittel, Verlaufshilfsmittel, Netz- und Dispergierhilfsmittel, Oxidationsschutzmittel, pH stabilisierende Agentien wie Amine, z.B. Ethanolamin, Diethanolamin, Triethanolamin, Dibutylamin, Ammoniumacetat, Natrium- und Kaliumacetat, Lösungsmittel, z.B. Alkohole wie Methanol, Ethanol, n-Propanol, iso-Propanol und Butanol, Ketone wie Aceton und Butanon, Ester wie Butylacetat und Methoxypropylacetat, aromatische Lösemittel wie Toluol und Xylol und aliphatische Lösemittel wie Hexan oder Lackbenzin.

In einer bevorzugten Ausrührungform der Erfindung weist die wässrige Zubereitung, folgende Zusammensetzung auf:
I) 5 bis 60 Gew.-Teile, bevorzugt 5 bis 30 Gew.-Teile einer wässrigen Emulsion eines polyfünktionellen Carbosilans und/oder -siloxans (A),
II) 5 bis 60 Gew.-Teile einer wässrigen Emulsion mindestens eines hydroxyund/oder alkoxyfünktionellen Organopolysiloxans (B),
III) 20 bis 60 Gew.-Teile, mindestens eines in Wasser dispergierten oder emulgierten organischen Polymeren (C),
IV) 10 bis 30 Gew.-Teile von in Wasser dispergierten oder dispergierbaren anorganischen Nanopartikeln (D) und
V) gegebenenfalls weitere Zusatzstoffe (E),
mit der Maßgabe, dass die Summe der Komponenten (I) bis (V) 100 Gew.-Teile ergibt.

Der Wirkstoffgehalt der wäßrigen Zubereitung beträgt 5 bis 60 Gew.-%, bevorzugt 10 bis 50 Gew.-%, besonders bevorzugt 20 bis 40 Gew.-%.

Gegenstand der vorliegenden Erfindung ist auch ein Verfahren zur Herstellung der erfindungsgemäßen Zubereitungen, wobei die Einzelkomponenten (I) bis (V) miteinander verrührt werden. Die Einzelkomponenten können dabei in beliebiger Reihenfolge zusammengemischt und nach bekannten Verfahren miteinander verrührt werden, bis eine homogene Mischung entstanden ist. Ebenso können z.B. zunächst Mischungen aus (I) und (II) hergestellt werden, zu denen dann getrennt oder zusammen wässrige Mischungen der Komponenten (III) bis (V) zugemischt werden. In einer bevorzugten Ausführungsform der Erfindung werden getrennt hergestellte Einzelemulsionen und/oder Dispersionen der Komponenten (I) bis (IV) und gegebenenfalls weitere Zusatzstoffe (E) miteinander verrührt.

Enthält die wässrige Zubereitung als Komponente (E) anorganische oder organische Hilfsstoffe, werden zur Herstellung der erfindungsgemäßen Zubereitung die zur Herstellung von Lacken angewandten Methoden, wie Kugelmühlen und andere intensive Mischverfahren bevorzugt.

Die erfindungsgemäße wässrige Zubereitung kann sowohl als Einkomponenten- als auch als Mehrkomponentensystem formuliert werden. Es können beispielsweise alle Komponenten (1) bis (V) nach dem erfindungsgemäßen Verfahren zusammen gegeben werden. Es ist aber auch möglich eine oder mehrere der Komponenten (II) bis (V) erst kurz vor der Applikation mit der wässrigen Zubereitung zu mischen. Die Zubereitung ist ausreichend lagerstabil und kann mit Wasser auf die für die entsprechende Anwendung gewünschte Verarbeitungskonzentration verdünnt werden.

Gegenstand der Erfindung ist zudem ein Verfahren zur Behandlung mineralischer Baustoffe mit der erfindungsgemäßen Zubereitung, wobei die Zubereitung auf das zu beschichtende Material aufgetragen, vorzugsweise mittels Spritz-, Tauch-, Rollenund Streichtechnik und anschließend bei Temperaturen <150 °C, vorzugsweise bei Raumtemperatur, getrocknet wird.

Die erfindungsgemäßen Zubereitung kann auch während der Herstellung des zu verwendenden Substrates, z.B. bei der Herstellung von Betonfertigteilen, aufgebracht werden. Die zu behandelnden Materialien können je nach Art und Anwendungszweck vorbehandelt oder unvorbehandelt eingesetzt werden. Eine etwaige Vorbehandlung kann nach allen bekannten Verfahren, wie beispielsweise Strahlbehandlung, durchgeführt werden.

Gegenstand der Erfindung ist zudem die Verwendung der erfindungsgemäßen wässrigen Zubereitung als Hydrophobier- und/oder Imprägniermittel oder zur Easy to Clean und/oder Antigraffiti-Ausrüstung für mineralische Baustoffe.

Die folgenden Beispiele verdeutlichen die Erfindung, ohne dabei limitierend zu wirken.

### Ausführungsbeispiele

### Herstellen der Ausgangskomponenten:

### 1a) Herstellung einer Emulsion eines polyfunktionellen Carbosiloxans (I)

In einem 2-1-Rührreaktor mit Ankerrührer wurden 242,4 g entionisiertes Wasser vorgelegt, auf 50°C erwärmt, eine auf 80°C erwärmte Mischung aus 34,33 g Polyoxyethylentriglycerid (Emulgator Atlas G-1300 der Firma ICI) und 15,67 g oxylethylierter Tridecylalkohol (Emulgator Renex 36 der Firma ICI) zugegeben und 15 Minuten bei einer Rührerdrehzahl von 1000/Minute gerührt. Die Mischung wurde auf 23°C gekühlt und 2,0 g Fungizid (Preventol D2 der Firma Bayer AG Deutschland) zugegeben. 1000,0 g einer Lösung aus 75 Gew.-% des Siloxans, einem Gemisch, bestehend zu ca. 50 Gew.-% aus der Verbindung der Formel (4) und 50 Gew.-% höheren Kondensaten und 25 % n-Butanol wurde unter Rühren in die Mischung eingetropft und 30 Minuten nachgerührt. Anschließend wurden 705,6 g Wasser zugetropft und weitere 30 Minuten nachgerührt. Die erhaltene Emulsion wurde mit Hilfe eines Strahldispergators bei einem Gesamtdruck von 200 bar mit einem Durchgang nachemulgiert. Man erhielt eine feinteilige, mehr als 6 Monate stabile Emulsion mit einem Feststoffgehalt von 40,1 % und einer mittleren Teilchengröße von 0,37 µm.

Die Teilchengröße wurde in allen Beispielen mittels Lichtstreumessung ermittelt.

### 1b) Herstellung einer weiteren Emulsion eines polyfunktionellen Carbosiloxans (I)

In einem 1-1-Rührreaktor mit Ankerrührer wurden 90,9 g entionisiertes Wasser vorgelegt, auf 50°C erwärmt, eine auf 80°C erwärmte Mischung aus 17,16 g Polyoxyethylentriglycerid (Emulgator Atlas G-1300 der Firma ICI) und 7,84 g oxylethylierter Tridecylalkohol (Emulgator Renex 36 der Firma ICI) zugegeben und 15 Minuten bei einer Rührerdrehzahl von 1000 U/Minute gerührt. Die Mischung wurde auf 23°C gekühlt und 1,0 g des Fungizids (Preventol D2, erhältlich bei der Firma Bayer AG Deutschland) und 5,0 g Diethanolamin zugegeben, 500,0 g Siloxan, einem Gemisch aus der Verbindung der Formel (5) und höheren Kondensaten der Verbindung der Formel (5) wurde unter Rühren in die Mischung eingetropft und 30 Minuten nachgerührt. Anschließend wurden weitere 378,1 g Wasser zugetropft und weitere 30 Minuten nachgerührt. Die erhaltene Emulsion wurde mit Hilfe eines Strahldispergators bei einem Gesamtdruck von 500 bar bei einem Durchgang nachemulgiert. Man erhielt eine feinteilige, mehr als 6 Monate stabile Emulsion mit einem Feststoffgehalt von 53,1 % und einer mittleren Teilchengröße von 0,50 µm.

### Beispiel 1

### Herstellung der erfindungsgemäßen Zubereitung

In einem Becherglas wurden unter Rühren bei einer Temperatur von 21°C zu 9,13 g einer nach 1a) hergestellten Emulsion eines multifunktionellen Carbosiloxans nacheinander 38,2 g einer wässrigen Emulsion eines methoxyfunktionellen Organopolysiloxans (B) mit einem Wirkstoffgehalt von 35 Gew.-%, 31,8 g einer wässrigen Emulsion eines hydroxylgruppenhaltigen Polyacrylatharzes (C) mit einem Wirkstoffgehalt von 42 Gew.-% und einer OH-Zahl von 4 % bezogen auf das Harz (erhältlich bei der Bayer AG unter dem Handelsnamen Bayhydrol® VPLS 2054), 21,2 g einer wässrigen Kieselsoldispersion (D) mit einem SiO₂-Gehalt von 30 Gew.-% und einer Teilchengröße von 7-8 nm (erhältlich bei der Bayer AG unter dem Handelsnamen Levasil® 300/30 %) und 1,5 g einer wäßrigen Katalysatoremulsion (E) gegeben. Die Reaktionsmischung wurde 30 min nachgerührt. Es enstand eine homogene wässrige Zubereitung mit einem Wirkstoffgehalt von 36 Gew.-%

### Beispiel 2:

### Herstellung der erfindungsgemäßen Zubereitung

In einem Becherglas wurden unter Rühren bei einer Temperatur von 21°C zu 7,3 g einer nach 1b) hergestellten Emulsion eines multifunktionellen Carbosiloxans nacheinander 38,2 g einer wässrigen Emulsion eines methoxyfunktionellen Organopolysiloxans mit einem Wirkstoffgehalt von 35 Gew.-% (B), 31,8 g einer wässrigen Emulsion eines hydroxylgruppenhaltigen Polyacrylatharzes mit einem Wirkstoffgehalt von 42 Gew.-% und einer OH-Zahl von 4 % bezogen auf das Harz (erhältlich bei der Bayer AG unter dem Handelsnamen Bayhydrol® VPLS 2054 (C)), 21,2 g einer wässrigen Kieselsoldispersion mit einem SiO₂-Gehalt von 30 Gew.-% und einer Teilchengröße von 7-8 nm (erhältlich bei der Bayer AG unter dem Handelsnamen Levasil® 300/30 % (D)) und 1,5 g einer wässrigen Katalysatoremulsion (E) gegeben. Die Reaktionsmischung wurde 30 min nachgerührt. Es enstand eine homogene wässrige Zubereitung mit einem Wirkstoffgehalt von 37 Gew.-%

### Anwendungsbeispiele:

Zur Prüfung der Hydrophobier- bzw. Imprägnier- sowie der Easy to Clean-Eigenschaften wurden auf 5 x 7 cm große Betonprüfkörper (Zementmörtel nach DIN 196-1 + Zement PZ 35 + Wasser nach 28 Tagen Lagerung) und 5 x 7 cm große Prüfkörper aus Kalksandstein die erfindungsgemäßen wässrigen Zubereitungen aus den Beispielen 1 und 2 mit dem Pinsel aufgetragen. Anschließend wurden die Prüfkörper 7 Tage bei 20°C gelagert. Die Hydrophobier -/Imprägnierwirkung wurde durch fünfminütiges Überleiten von Wasser auf das in einem Winkel von 45° aufgestellte Substrat geprüft. Der Grad der Benetzung wurde optisch beurteilt. Als Graffiti wurde auf je ein Prüfkörper handelsüblicher grüner Spraylack und Staedler Permanentmarker der Farben rot und schwarz aufgetragen. Nach 12 Stunden Lagerung wurde geprüft, ob der Permanentmarker durch fünfmaliges Wischen mit einem mit Isopropanol getränkten Baumwolltuch entfernt werden kann. Beim grünen Spraylack wurde geprüft,ob das Graffiti mit Prochemko Antigraffiti und mit Henkel P3 scribex entfernt werden kann. Hierzu wurde auf das besprühte Substrat Prochemko Antigraffiti aufgetragen, 10 Minuten einwirken gelassen und anschließend abgewischt. Bei Henkel P3 wurde fünfmal mit einem Baumwolltuch gerieben. Das gleiche Behandlungsverfahren wurde bei den Vergleichsbeispielen angewandt.

In die Bewertung der Easy to Clean/Antigraffiti-Eigenschaften sind folgende Parameter berücksichtigt:
1. Das optische Erscheinungsbild des Substrates nach Behandlung mit den erfindungsgemäßen Zubereitungen und den Vergleichsmustern:
   - Q:: Optisches Erscheinungsbild des Substrates nicht verändert
   - R:: Substrat im optischen Erscheinungsbild leicht verändert (glänzend bzw. in der Farbe dunkler als vor der Behandlung)
   - S:: Substrat im optischen Erscheinungsbild deutlich verändert (glänzend bzw. in der Farbe dunkler als vor der Behandlung)
2. Imprägnier/Hydrophobierwirkung:
   - q:: Wasser perlt von Substratoberfläche vollständig ab
   - r:: Wasser perlt weitestgehend ab, Substrat leicht benetzt
   - s:: Substrat vollständig durch Wasser benetzt
3. Easy to Clean/Antigraffiti-Eigenschaften:
   - X:: Spraylack und Staedler Permanentmarker vollständig entfernt
   - Y:: Spraylack entfernt, bei Staedler Permanentmarker noch Schatten
   - Z:: Spraylack und Staedler Permanentmarker noch sichtbar

### Beispiel 3:

### Behandlung mit erfindungsgemäßer Zubereitung

Je ein Prüfkörper aus Beton und Kalksandstein wurde mit der erfindungsgemäßen wässrigen Zubereitung aus Beispiel 1 wie beschrieben behandelt. Anschließend wurden die angegebenen Parameter geprüft.

### Beispiel 4:

### Behandlung mit erfindungsgemäßer Zubereitung

Je ein Prüfkörper aus Beton und Kalksandstein wurde mit der erfindungsgemäßen wässrigen Zubereitung aus Beispiel 2 wie beschrieben behandelt. Anschließend wurden die angegebenen Parameter geprüft.

### Beispiel 5 (Vergleichsbeispiel):

### Behandlung mit wässriger Imprägnieremulsion auf Silan/Siloxanbasis

Je ein Prüfkörper aus Beton und Kalksandstein wurde mit einer handelsüblichen wässrigen Imprägnieremulsion auf Silan/Siloxanbasis mit einem Wirkstoffgehalt von 60 % behandelt. Die wässrige Imprägnieremulsion wurde vor der Applikation entsprechend der Verarbeitungsvorschrift im Verhältnis 1:9 mit Wasser verdünnt. Die Prüfkörper wurden 30 Sekunden in die verdünnte Imprägnieremulsion eingetaucht und anschließend 7 Tage bei 20°C gelagert. Es wurden angegebenen Parameter geprüft.

### Beispiel 6 (Vergleichsbeispiel):

### Lösemittelbasierende Zubereitung auf Basis multifunktioneller Carbosilane

In einem Becherglas wurden zu 68 g einer 30 %igen ethanolischen Lösung eines Reaktionsproduktes aus 2,6 Gew.-Teilen *gamma*-Aminopropyltriethoxysilan mit einem Gew.-Teil eines aliphatischen Polyisocyanates mit einem NCO-Gehalt von 21,5 Gew.-% bei einer Temperatur von 19°C unter Rühren nacheinander 29,5 g n-Butanol und 2,7 g 0,1 n p-Toluolsulfonäure gegeben. Die Reaktionsmischung wird 60 min bei 19°C gerührt.

Je ein Prüfkörper aus Beton und Kalksandstein wurde mit der lösemittelhaltigen Zubereitung wie beschrieben behandelt. Anschließend wurden die angegebenen Parameter geprüft.

| **Ergebnis der Prüfung:** | | | | | | |
|---|---|---|---|---|---|---|
| Beispiel | Optisches Erscheinungsbild des Substrates | | Imprägnier/Hydrophobierwirkung | | Easy to Clean/Antigraffiti/Eigenschaften | |
| | Beton | Kalksandstein | Beton | Kalksandstein | Beton | Kalksandstein |
| Beispiels 3 | Q | Q | q | q | X | X |
| Beispiel 4 | Q | Q | q | q | X | X |
| Vergleichsbeispiel 5 | Q | Q | q | q | Z | Z |
| Vergleichsbeispiel 6 | R | S | r | r | Z | Y |

Die erfindungsgemäßen wässrigen Zubereitungen erfüllen alle an die Erfindung gestellten Aufgaben. Das Erscheinungsbild des mineralischen Baustoffs wird optisch nicht verändert, der Baustoff ist nach Behandlung mit den erfindungsgemäßen wässrigen Zubereitungen ausreichend hydrophobiert bzw. imprägniert und er kann auf einfache Art vollständig von Graffiti gereinigt werden.

Handelsübliche wässrige Imprägnieremulsionen auf Silan/Siloxanbasis (Vergleichsbeispiel 5) verändern ebenfalls nicht das Erscheinungsbild mineralischer Baustoffe und hydrophobieren bzw. imprägnieren sie ausreichend. Es ist aber nicht möglich mineralische Baustoffe durch Behandeln mit wässrigen Imprägnieremulsionen auf Silan/Siloxanbasis vor Graffiti zu schützen.

Lösemittelhaltige Sol/Gel-Systeme multifunktioneller Carbosilane erfüllen keine der gestellten Aufgabe zufriedenstellend.

## Patentansprüche

1. Wässrige Zubereitung, enthaltend:
I) eine Emulsion eines polyfunktionellen Carbosilans und/oder -siloxans (A)
II) eine Emulsion mindestens eines Organo(poly)siloxans (B),
III) mindestens ein in Wasser dispergiertes oder emulgiertes organisches Polymer (C),
IV) in Wasser dispergierte oder dispergierbare anorganische Nanopartikel (D) sowie
V) gegebenenfalls weitere Zusatzstoffe (E).

2. Wässrige Zubereitung nach Anspruch 1, **dadurch gekennzeichnet, dass** das polyfünktionelle Carbosilan und/oder -siloxan (A) ein Silan oder Siloxan ist, welches mindestens zwei Einheiten der allgemeinen Formel (1)
-(CH₂)ₘSiR¹ ₙX₃₋ₙ (1)
aufweist, mit
m = 1 bis 6,
n = eine ganze Zahl von 0 bis 2,
R¹= ein unsubstituierter C₁-C₁₈-Kohlenwasserstoff oder ein C₁-C₁₈-Kohlenwasserstoff, der mindestens O, N, S und/oder P enthält, wobei R¹ innerhalb des Moleküls gleich oder ungleich sein kann und
X = ein Rest ausgewählt aus der Gruppe OH, C₁-C₄-Alkoxy, C₆-C₂₀-Aryl-oxy, C₁-C₆-Acyloxy oder Wasserstoff.

3. Wässrige Zubereitung nach Anspruch 1, **dadurch gekennzeichnet, dass** das polyfünktionelle Carbosilan und/oder -siloxan (A) ein Silan der allgemeinen Formel (2)
R² ₄₋ₚSi[-Oₜ(CH₂)ₘSiR¹ ₙX₃₋ₙ]ₚ (2)
oder dessen Teilkondensationsprodukt ist,
mit
t= 0 oder 1,
p = 4, 3 oder 2,
m = 1 bis 6, n=0 bis 2,
R²= C₁- C₁₈ Alkyl und/oder C6 - C₂₀-Aryl und
R¹ = ein unsubstituierter C₁ -C₁₈-Kohlenwasserstoff oder ein C₁-C₁₈- Kohlenwasserstoff, der mindestens O, N, S und/oder P enthält, wobei R¹ innerhalb des Moleküls gleich oder ungleich sein kann, und
X= ein Rest, ausgewählt aus der Gruppe OH, C₁-C₄-Alkoxy, C₆-C₂₀-Aryloxy, C₁-C₆-Acyloxy oder Wasserstoff.

4. Wässrige Zubereitung nach Anspruch 1, **dadurch gekennzeichnet, dass** das polyfunktionelle Carbosilan (A) ein Siloxan und/oder dessen Teilkondensationsprodukt ist, welches mindestens zwei Einheiten der allgemeinen Formel (1)
- (CH₂)ₘSiR¹ ₙX₃₋ₙ (1)
aufweist, mit
m = 1 bis 6,
n = eine ganze Zahl von 0 bis 2,
R¹ = ein unsubstituierter C₁-C₁₈-Kohlenwasserstoff oder ein C₁-C₁₈-Kohlenwasserstoff, der mindestens O, N, S und/oder P enthält, wobei R¹ innerhalb des Moleküls gleich oder ungleich sein kann und
X = ein Rest ausgewählt aus der Gruppe OH, C₁-C₄-Alkoxy, C₆-C₂₀-Aryl-oxy, C₁-C₆-Acyloxy oder Wasserstoff,
zusammengesetzt aus mindestens zwei Bausteinen, ausgewählt aus
monofunktionellen Einheiten R³₃SiO_{1/2}
difünktionellen Einheiten R⁴₂SiO_{2/2} und
trifunktionellen Einheiten R⁵SiO_{3/2} sowie gegebenenfalls zusätzlich
tetrafunktionellen Einheiten SiO_{4/2}, wobei
R³, R⁴ und R⁵ unabhängig voneinander H, C₁-C₁₈-Alkyl, C₂-C₁₈-Alkenyl und/oder C₆-C₂₀-Aryl oder Einheiten der allgemeinen Formel (1) bedeuten.

5. Wässrige Zubereitung gemäß Anspruch 4, **dadurch gekennzeichnet, dass** das polyfunktionelle Carbosilan (A) ein Siloxan mit einem Molekulargewicht (Zahlenmittel) von 300 bis 5000 ist.

6. Wässrige Zubereitung nach Anspruch 1, **dadurch gekennzeichnet, dass** das polyfunktionelle Carbosilan (A) eine Verbindungen der Formel (3) 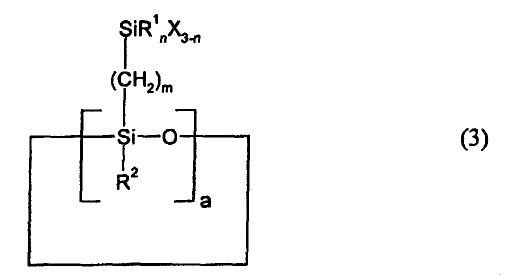 oder deren Teilkondensationsprodukt ist, mit
n = 0 bis 2,
m = 1 bis 6,
a = 3 bis 6,
R¹ = ein unsubstituierter C₁-C₁₈-Kohlenwasserstoff oder ein C₁-C₁₈-Kohlenwasserstoff, der mindestens O, N, S und/oder P enthält, wobei R¹ innerhalb des Moleküls gleich oder verschieden sein kann
und
R²= C₁-C₁₈-Alkyl und/oder C₆-C₂₀-Aryl
X = ein Rest ausgewählt aus der Gruppe OH, C₁-C₄-Alkoxy, C₆-C₂-Aryl-oxy, C₁-C₆-Acyloxy oder Wasserstoff.

7. Wässrige Zubereitung nach Anspruch 1, **dadurch gekennzeichnet, dass** das polyfunktionelle Carbosilan (A) eine Verbindung der Formel (4) 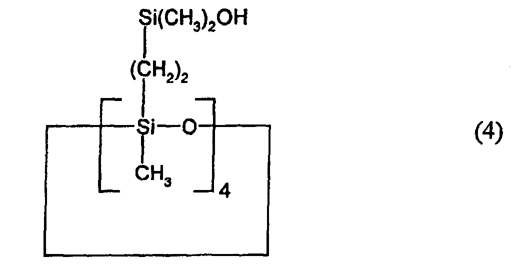 oder deren Teilkondensationsprodukt ist.

8. Wässrige Zubereitung nach Anspruch 1, **dadurch gekennzeichnet, dass** das polyfünktionelle Carbosiloxan (A) eine Verbindung der Formel (5) 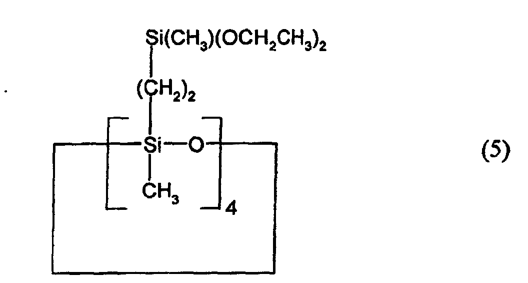 oder deren Teilkondensationsprodukt ist.

9. Wässrige Zubereitung nach einem oder mehreren der Ansprüche 1 bis 8, **dadurch gekennzeichnet, dass** die Komponente (B) eine wässrige Emulsion mindestens eines hydroxy- und/oder alkoxyfünktionellen Organopolysiloxans ist, das sich zusammensetzt aus
0 - 50 Gew.-% monofunktionellen Einheiten R⁶₃SiO_{1/2}
0 - 60 Gew.-% difunktionellen Einheiten R⁷₂SiO_{2/2}
0 - 100 Gew.-% trifunktionellen Einheiten R⁸SiO_{3/2} und
0 - 60 Gew.-% tetrafunktionellen Einheiten SiO_{4/2}, wobei
die Summe aller Einheiten 100 Gew.-% ergibit und R⁶, R⁷ und R⁸ innerhalb des Moleküls gleiche oder ungleiche unsubstituierte C₁-C₁₈-Kohlenwasserstoffe oder Kohlenwasserstoffe, die mindestens O, N, S und/oder P enthalten, bedeuten.

10. Wässrige Zubereitung nach einem oder mehreren der Ansprüche 1 bis 9, **dadurch gekennzeichnet, dass** die Komponente (C) eine wässrige hydroxyfünktionelle und/oder alkoxysilylgruppenhaltige Acrylatdispersion ist.

11. Wässrige Zubereitung nach einem oder mehreren der Ansprüche 1 bis 9, **dadurch gekennzeichnet, dass** die Komponente (C) ein in Wasser dispergierbares oder emulgiertes harnstoff- oder urethangruppenhaltiges Polymer mit Hydroxy- und/oder Alkoxysilylgruppen ist.

12. Wässrige Zubereitung nach einem oder mehreren der Ansprüche 1 bis 11, **dadurch gekennzeichnet, dass** die in Wasser dispergierten oder dispergierbaren anorganischen Nanopartikel (D) Metall- oder Halbmetalloxide und/oder Oxidhydrate mit einem Teilchendurchmesser von 5 - 100 nm sind.

13. Wässrige Zubereitung nach einem oder mehreren der Ansprüche 1 bis 12, **dadurch gekennzeichnet, dass** die in Wasser dispergierten oder dispergierbaren anorganischen Nanopartikel (D) eine wässrige Dispersion von Siliciumdioxid mit einer mittleren Teilchengröße von 5 - 100 nm, bevorzugt 5 - 50 nm ist.

14. Verfahren zur Herstellung der wässrigen Zubereitung nach einem oder mehreren der Ansprüche 1 bis 13 **dadurch gekennzeichnet, dass** die Komponenten (I) bis (V) miteinander verrührt werden.

15. Verwendung der wässrigen Zubereitung nach einem oder mehreren der Ansprüche 1 bis 13 als Hydrophobier- und/oder Imprägniermittel für mineralische Baustoffe.

16. Verwendung der wässrigen Zubereitung nach einem oder mehreren der Ansprüche 1 bis 13 zur Easy to Clean und/oder Antigraffiti-Ausrüstung von mineralischen Baustoffen.

17. Verfahren zur Behandlung mineralischer Baustoffe, **dadurch gekennzeichnet, dass** die wässrige Zubereitung gemäß Anspruch 1 bis 13 auf feste mineralische Baustoffe aufgetragen und anschließend bei Temperaturen <150°C getrocknet wird.

## Claims

1. Aqueous preparation, containing:
I) an emulsion of a polyfunctional carbosilane and/or carbosiloxane (A)
II) an emulsion of at least one organo(poly)siloxane (B),
III) at least one organic polymer dispersed or emulsified in water (C),
IV) inorganic nanoparticles dispersed or dispersible in water (D) and
V) optionally other additives (E).

2. Aqueous preparation according to claim 1, **characterised in that** the polyfunctional carbosilane and/or carbosiloxane (A) is a silane or siloxane exhibiting at least two units of the general formula (1)
-(CH₂)ₘSiR¹ ₙX₃₋ₙ (1)
with
m = 1 to 6,
n = an integer from 0 to 2,
R¹ = an unsubstituted C₁-C₁₈ hydrocarbon or a C₁-C₁₈ hydrocarbon containing at least O, N, S and/or P, wherein R¹ can be the same or different within the molecule and
X = a radical selected from the group OH, C₁-C₄ alkoxy, C₆-C₂₀ aryloxy, C₁-C₆ acyloxy or hydrogen.

3. Aqueous preparation according to claim 1, **characterised in that** the polyfunctional carbosilane and/or carbosiloxane (A) is a silane of the general formula (2)
R² ₄₋ₚSi[-Oₜ(CH₂)ₘSiR¹ ₙX₃₋ₙ]ₚ (2)
or its partial condensation product,
with
t = 0 or 1,
p = 4,3 or 2,
m = 1 to 6, n = 0 to 2,
R² = C₁-C₁₈ alkyl and/or C₆-C₂₀ aryl and
R¹ = an unsubstituted C₁-C₁₈ hydrocarbon or a C₁-C₁₈ hydrocarbon containing at least O, N, S and/or P, wherein R¹ can be the same or different within the molecule and
X = a radical selected from the group OH, C₁-C₄ alkoxy, C₆-C₂₀ aryloxy, C₁-C₆ acyloxy or hydrogen.

4. Aqueous preparation according to claim 1, **characterised in that** the polyfunctional carbosilane (A) is a siloxane and/or its partial condensation product exhibiting at least two units of the general formula (1)
(CH₂)ₘSiR¹ ₙX₃₋ₙ (1)
with
m = 1 to 6,
n = an integer from 0 to 2,
R¹ = an unsubstituted C₁-C₁₈ hydrocarbon or a C₁-C₁₈ hydrocarbon containing at least O, N, S and/or P, wherein R¹ can be the same or different within the molecule and
X = a radical selected from the group OH, C₁-C₄ alkoxy, C₆-C₂₀ aryloxy, C₁-C₆ acyloxy or hydrogen,
composed of at least two structural elements selected from
monofunctional units R³ ₃SiO_{1/2}
difunctional units R⁴₂SiO_{2/2} and
trifunctional units R⁵SiO_{3/2}, and optionally additionally
tetrafunctional units SiO_{4/2}, wherein
R₃, R₄ and R₅, independently of one another, signify H, C₁-C₁₈ alkyl, C₂-C₁₈ alkenyl and/or C₆-C₂₀ aryl or units of the general formula (1).

5. Aqueous preparation according to claim 4, **characterised in that** the polyfunctional carbosilane (A) is a siloxane with a molecular weight (number average) of 300 to 5000.

6. Aqueous preparation according to claim 1, **characterised in that** the polyfunctional carbosilane (A) is a compound of formula (3) 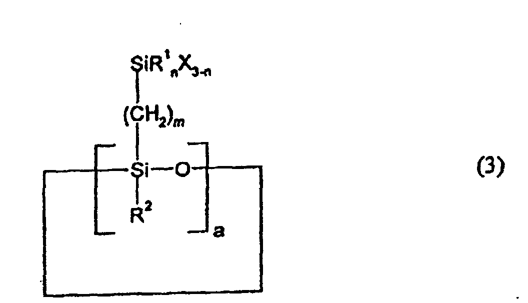 or its partial condensation product, with
n = 0 to 2,
m = 1 to 6,
a = 3 to 6,
R¹ = an unsubstituted C₁-C₁₈ hydrocarbon or a C₁ -C₁₈ hydrocarbon containing at least O, N, S and/or P, wherein R¹ can be the same or different within the molecule
and
R² = C₁-C₁₈ alkyl and/or C₆-C₂₀ aryl,
X = a radical selected from the group OH, C₁-C₄ alkoxy, C₆-C₂₀ aryloxy, C₁-C₆ acyloxy or hydrogen.

7. Aqueous preparation according to claim 1, **characterised in that** the polyfunctional carbosilane (A) is a compound of formula (4) 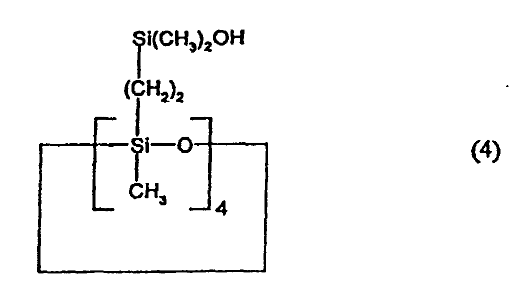 or its partial condensation product.

8. Aqueous preparation according to claim 1, **characterised in that** the polyfunctional carbosilane (A) is a compound of formula (5) 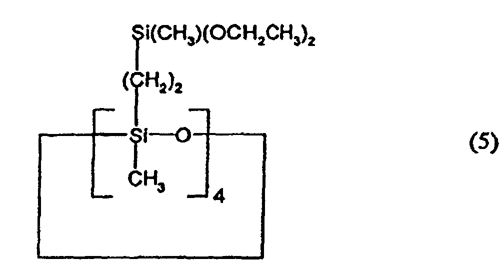 or its partial condensation product.

9. Aqueous preparation according to one or more of claims 1 to 8, **characterised in that** the component (B) is an aqueous emulsion of at least one hydroxy- and/or alkoxy-functional organopolysiloxane, which is composed of
0 - 50 wt.% monofunctional units R⁶₃SiO_{1/2}
0 - 60 wt.% difunctional units R⁷₂SiO_{2/2}
0 - 100 wt.% trifunctional units R⁸SiO_{3/2} and
0 - 60 wt.% tetrafunctional units SiO_{4/2}, wherein
the sum of all units is 100 wt.% and R⁶, R⁷ and R⁸ signify unsubstituted C₁-C₁₈ hydrocarbons or hydrocarbons containing at least O, N, S and/or P, which are the same or different within the molecule.

10. Aqueous preparation according to one or more of claims 1 to 9, **characterised in that** the component (C) is an aqueous hydroxyfunctional and/or alkoxysilyl group-containing acrylate dispersion.

11. Aqueous preparation according to one or more of claims 1 to 9, **characterised in that** the component (C) is a urea or urethane group-containing polymer with hydroxy and/or alkoxysilyl groups dispersible or emulsified in water.

12. Aqueous preparation according to one or more of claims 1 to 11, **characterised in that** the inorganic nanoparticles dispersed or dispersible in water (D) are metal or semimetal oxides and/or hydrated oxides with a particle diameter of 5-100nm.

13. Aqueous preparation according to one or more of claims 1 to 12, **characterised in that** the inorganic nanoparticles dispersed or dispersible in water (D) are an aqueous dispersion of silicon dioxide with an average particle size of 5 - 100 nm, preferably 5 - 50 nm.

14. Process for the production of the aqueous preparation according to one or more of claims 1 to 13, **characterised in that** the components (I) to (V) are mixed together.

15. Use of the aqueous preparation according to one or more of claims 1 to 13 as a waterproofing agent and/or impregnating agent for mineral building materials.

16. Use of the aqueous preparation according to one or more of claims 1 to 13 to provide an easy-to-clean and/or anti-graffiti finish for mineral building materials.

17. Process for the treatment of mineral building materials, **characterised in that** the aqueous preparation according to claims 1 to 13 is applied on to solid mineral building materials and then dried at temperatures of < 150°C.

## Revendications

1. Composition aqueuse, contenant :
I) une émulsion d'au moins un carbosilane et/ou -siloxane polyfonctionnel (A),
II) une émulsion d'au moins un organo(poly)siloxane (B),
III) au moins un polymère organique (C) dispersible ou émulsionnable dans l'eau,
IV) des nanoparticules inorganiques (D) dispersées ou dispersibles dans l'eau, ainsi que
V) le cas échéant, d'autres additifs (E).

2. Composition aqueuse suivant la revendication 1, **caractérisée en ce que** le carbosilane et/ou -siloxane polyfonctionnel (A) est un silane ou siloxane, qui présente au moins deux unités de la formule générale (1) :
- (CH₂)ₘSiR¹ ₙX₃₋ₙ (1)
avec
m = 1 à 6,
n = un nombre entier allant de 0 à 2,
R¹ représente un radical hydrocarbure en C₁-C₁₈ non substitué ou un radical hydrocarbure en C₁-C₁₈, qui contient au moins l'atome O, N, S et/ou P, où R¹ peut être identique ou différent dans la molécule, et
X représente un reste choisi parmi le groupe consistant en OH, alcoxy en C₁-C₄, aryloxy en C₆-C₂₀ acyloxy en C₁-C₆ ou l'atome d'hydrogène.

3. Composition aqueuse suivant la revendication 1, **caractérisée en ce que** le carbosilane et/ou -siloxane polyfonctionnel (A) est un silane de la formule générale (2) :
R² ₄₋ₚSi[-Oₜ (CH₂) ₘSiR¹ ₙX₃₋ₙ]ₚ (2)
ou ses produits de condensation partielle, avec
t = 0 ou 1,
p = 4, 3 ou 2,
m = 1 à 6, n = 0 à 2,
R² représente un radical alcoyle en C₁-C₁₈ et/ou aryle en C₆-C₂₀, et
R¹ représente un radical hydrocarbure en C₁-C₁₈ non substitué ou un radical hydrocarbure en C₁-C₁₈, qui contient au moins l'atome O, N, S et/ou P, où R¹ peut être identique ou différent dans la molécule, et
X représente un reste choisi parmi le groupe consistant en OH, alcoxy en C₁-C₄, aryloxy en C₆-C₂₀, acyloxy en C₁-C₆ ou l'atome d'hydrogène.

4. Composition aqueuse suivant la revendication 1, **caractérisée en ce que** le carbosilane polyfonctionnel (A) est un siloxane et/ou son produit de condensation partielle, qui présente au moins deux unités de la formule générale (1) :
- (CH₂)ₘSiR¹ ₙX₃₋ₙ (1)
avec
m = 1 à 6,
n = un nombre entier allant de 0 à 2,
R¹ représente un radical hydrocarbure en C₁-C₁₈ non substitué ou un radical hydrocarbure en C₁-C₁₈, qui contient au moins l'atome O, N, S et/ou P, où R¹ peut être identique ou différent dans la molécule, et
X représente un reste choisi parmi le groupe consistant en OH, alcoxy en C₁-C₄, aryloxy en C₆-C₂₀, acyloxy en C₁-C₆ ou l'atome d'hydrogène,
composé d'au moins deux unités structurelles, choisies parmi :
des unités monofonctionnelles R³₃SiO_{1/2},
des unités difonctionnelles R⁴₂SiO_{2/2}, et
des unités trifonctionnelles R⁵SiO_{3/2}, ainsi que le cas échéant, en outre
des unités tétrafonctionnelles SiO_{4/2}, où
R³, R⁴ et R⁵ représentent indépendamment l'un de l'autre, l'atome H, un radical alcoyle en C₁-C₁₈, alcényle en C₂-C₁₈ et/ou aryle en C₆-C₂₀ ou des unités de la formule générale (1).

5. Composition aqueuse suivant la revendication 4, **caractérisée en ce que** le carbosilane polyfonctionnel (A) est un siloxane avec un poids moléculaire (moyenne en nombre) allant de 300 à 5000.

6. Composition aqueuse suivant la revendication 1, **caractérisée en ce que** le carbosilane polyfonctionnel (A) est un composé de la formule (3) : 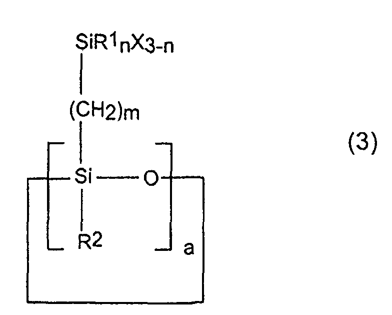 ou son produit de condensation partielle, avec
n = 0 à 2,
m = 1 à 6,
a = 3 à 6,
R¹ = un radical hydrocarbure en C₁-C₁₈ non substitué ou un radical hydrocarbure en C₁-C₁₈, qui contient au moins l'atome O, N, S et/ou P, où R¹ peut être identique ou différent dans la molécule,
R² représente un radical alcoyle en C₁-C₁₈ et/ou aryle en C₆-C₂₀, et
X représente un reste choisi parmi le groupe consistant en OH, alcoxy en C₁-C₄, aryloxy en C₆-C₂₀, acyloxy en C₁-C₆ ou l'atome d'hydrogène.

7. Composition aqueuse suivant la revendication 1, **caractérisée en ce que** le carbosilane polyfonctionnel (A) est un composé de la formule (4) : 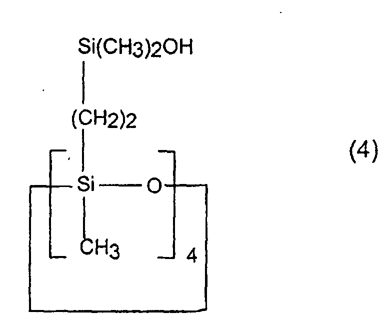 ou son produit de condensation partielle.

8. Composition aqueuse suivant la revendication 1, **caractérisée en ce que** le carbosiloxane polyfonctionnel (A) est un composé de la formule (5) : 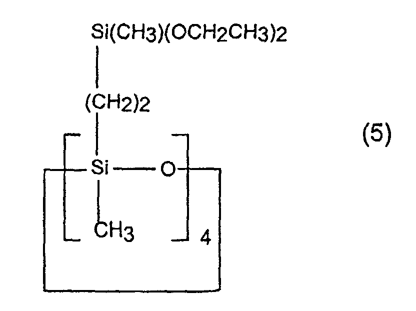 ou son produit de condensation partielle.

9. Composition aqueuse suivant une ou plusieurs des revendications 1 à 8, **caractérisée en ce que** le composant (B) est une émulsion aqueuse d'au moins un organopolysiloxane hydroxy- et/ou alcoxyfonctionnel, qui se compose de
0-50% en poids d'unités monofonctionnelles R⁶₃SiO_{1/2},
0-60% en poids d'unités difonctionnelles R⁷₂SiO_{2/2},
0-100% en poids d'unités trifonctionnelles R⁸SiO_{3/2}, et
0-60% en poids d'unités tétrafonctionnelles SiO_{4/2}, où
la somme de toutes les unités donne 100% en poids, et R⁶, R⁷ et R⁸ représentent dans la molécule, des radicaux identiques ou différents, hydrocarbure en C₁-C₁₈ non substitués ou hydrocarbure qui contiennent au moins un atome O, N, S et/ou P.

10. Composition aqueuse suivant une ou plusieurs des revendications 1 à 9, **caractérisée en ce que** le composant (C) est une dispersion aqueuse d'acrylate contenant des radicaux à fonction hydroxyle et/ou contenant des radicaux alcoxysilyle.

11. Composition aqueuse suivant une ou plusieurs des revendications 1 à 9, **caractérisée en ce que** le composant (C) est un polymère dispersible ou émulsionnable dans l'eau, contenant des radicaux urée ou uréthanne, avec des radicaux hydroxyle et/ou alcoxysilyle.

12. Composition aqueuse suivant une ou plusieurs des revendications 1 à 11, **caractérisée en ce que** les nanoparticules inorganiques dispersées ou dispersibles dans l'eau (D) sont des oxydes et/ou des oxyhydrates métalliques ou semi-métalliques avec un diamètre des particules allant de 5 à 100 nm.

13. Composition aqueuse suivant une ou plusieurs des revendications 1 à 12, **caractérisée en ce que** les nanoparticules inorganiques dispersées ou dispersibles dans l'eau (D) sont une dispersion aqueuse de dioxyde de silicium avec une taille moyenne des particules allant de 5 à 100 nm, de préférence de 5 à 50 nm.

14. Procédé de préparation de la composition aqueuse suivant une ou plusieurs des revendications 1 à 13, **caractérisé en ce que** les composants (I) à (V) sont agités les uns avec les autres.

15. Utilisation de la composition aqueuse suivant une ou plusieurs des revendications 1 à 13, comme agent rendant hydrophobe et/ou d'imprégnation pour matériaux de construction minéraux.

16. Utilisation de la composition aqueuse suivant une ou plusieurs des revendications 1 à 13, pour un revêtement Easy to Clean et/ou antigraffiti de matériaux de construction minéraux.

17. Procédé pour le traitement de matériaux de construction minéraux, **caractérisé en ce que** la composition aqueuse suivant les revendications 1 à 13, est appliquée sur les matériaux de construction minéraux solides et ensuite, séchée à des températures < 150°C.
